# EUROPEAN PATENT APPLICATION

(11) **EP 3 675 021 A1**
(43) Date of publication of application: **01.07.2020**
(21) Application number: 19202406.5
(22) Date of filing: 10.10.2019
(51) Int. Cl.: G06Q 30/06, G06Q 10/06

(54) **COMPUTER-IMPLEMENTED METHOD, COMPUTING DEVICE AND APPARATUS FOR EXECUTING WORKFLOW OF PROCESSING ORDERS**

(30) Priority: 28.12.2018 US 201862786035 P; 10.09.2019 US 201916566257
(71) Applicant: Evolutive Labs Co., Ltd., 10461 Taipei City (TW)
(72) Inventor: WANG, Ching-Fu, 10461 TAIPEI CITY (TW); HAMELIN, Patrick, 434 TAICHUNG CITY (TW)
(74) Representative: Casalonga

(57) **Abstract**

The present disclosure provides a computed-implemented method, a computing device and an apparatus for executing workflow of processing orders. The computing device retrieves information of an order of a plurality of orders. The computing device inputs the information of the order into a node having a condition associated with an operation. The computing device determines whether the information of the order meets a criterion of the condition. The computing device automatically executes the operation when the information of the order meets the criterion of the condition.

## Description

### TECHNICAL FIELD

The present disclosure relates generally to a computer-implemented method, a computing device and an apparatus for processing orders, more particularly, to a computer-implemented method, a computing device and an apparatus for automatically executing an order-processing workflow.

### DISCUSSION OF THE BACKGROUND

In contrast to traditional commerce, electronic commerce (E-commerce) includes activities of buying and selling of products over the Internet.

Sellers may receive orders placed from anywhere in the world. Due to the variety of the orders from such diversity of locations, a proper system is needed for the seller to manage the orders.

However, existing order-management systems are inflexible and mainly designed for enterprise-scale use, and as a result, these systems are not suitable for retailers.

Further, as for the existing order-management systems, some technical problems have not been solved yet. For example, the existing order-management systems do not have enough automaticity for processing orders because the information of the orders are not properly parsed and processed. Moreover, the existing order-management systems are not designed for cooperating with other physical devices. In addition, the existing order-management system cannot process the orders from a different order-management system.

### SUMMARY

Some embodiments of the present disclosure provide a computer-implemented method for automatically executing a workflow of processing a plurality of orders. The computer-implemented method includes: retrieving, by a processor, information of a first order of the plurality of orders, wherein the information of the first order is stored in a storage device; inputting, by the processor, the information of the first order into a first node, wherein a condition of the first node is associated with an operation; determining, by the processor, whether the information of the first order meets a criterion of the condition; and automatically executing, by the processor, the operation when the information of the first order meets the criterion of the condition.

Some embodiments of the present disclosure provide a computing device. The computing device includes a processor and a memory. The memory stores a program that, when executed, causes the processor to: retrieve information of a first order of the plurality of orders, wherein the information of the first order is stored in a storage device; input the information of the first order into a first node, wherein a condition of the first node is associated with an operation; determine whether the information of the first order meets a criterion of the condition; and automatically execute the operation when the information of the first order meets the criterion of the condition.

Some embodiments of the present disclosure provide an apparatus. The apparatus includes a processor, an I/O assembly, a switch and a memory. The memory stores a program that, when executed, causes the processor to: receive a control signal from a computing device via the I/O assembly through network; and activate the switch according to the control signal.

Some embodiments of the present disclosure provide a method for automatically executing a workflow across a plurality of nodes. The method includes: establishing, by a program, a plurality of nodes for processing a plurality of orders, one or more of the plurality of nodes assigned to process orders; receiving, by a first node of the plurality of nodes, information of an order, the first node configured to move orders to other nodes based on the information meeting a condition that identifies a certain status associated with the other nodes and the order; determining, by the first node, to move the order to a second node of the plurality of nodes based on the information of the order matching a criterion of the condition that identifies the certain status associated with the second node and the order; and moving, by the first node responsive to the determination, the order to the second node.

Some embodiments of the present disclosure provide a method for automatically executing a workflow across a plurality of nodes. The method includes: establishing, by a program, a plurality of nodes for processing a plurality of orders, one or more of the plurality of nodes assigned to process orders; receiving, by a first node of the plurality of nodes, information of an order, the first node configured to transmit a control signal to an apparatus based on the information meeting a condition that identifies a certain status associated with the apparatus and the order; determining, by the first node, to transmit the control signal to the apparatus based on the information of the order matching a criterion of the condition that identifies the certain status associated with the apparatus and the order; transmitting, by the program responsive to the determination, the control signal to the apparatus.

The foregoing has outlined rather broadly the features and technical advantages of the present disclosure in order that the detailed description of the disclosure that follows may be better understood. Additional features and advantages of the disclosure will be described hereinafter, and form the subject of the claims of the disclosure. It should be appreciated by those skilled in the art that the conception and specific embodiment disclosed may be readily utilized as a basis for modifying or designing other structures or processes for carrying out the same purposes of the present disclosure. It should also be realized by those skilled in the art that such equivalent constructions do not depart from the spirit and scope of the disclosure as set forth in the appended claims.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.

A more complete understanding of the present disclosure may be derived by referring to the detailed description and claims when considered in connection with the Figures, where like reference numbers refer to similar elements throughout the Figures.
FIG. 1 is a block diagram of a computing device according to some embodiments of the present disclosure.
FIG. 2 is a schematic view of order processing performed by the computing device according to some embodiments of the present disclosure.
FIG. 3A is a schematic view of order processing performed by the computing device according to some embodiments of the present disclosure.
FIG. 3B is a schematic view of an example of order processing performed by the computing device according to some embodiments of the present disclosure.
FIG. 4 is a schematic view of an example of establishing and arranging nodes according to some embodiments of the present disclosure.
FIGS. 5 and 6 are schematic views of examples of configuring a node according to some embodiments of the present disclosure.
FIG. 7 is a schematic view of an example of pre-configuring action parameters according to some embodiments of the present disclosure.
FIG. 8A is a block diagram of the computing device according to some embodiments of the present disclosure.
FIG. 8B is a schematic view of order processing performed by the computing device 1 according to some embodiments of the present disclosure.
FIG. 8C is a block diagram of an apparatus according to some embodiments of the present disclosure.
FIG. 8D is a schematic view of the connection between the computing device and the apparatus according to some embodiments of the present disclosure.
FIGS. 8E to 8H are schematic views of examples of an apparatus according to some embodiments of the present disclosure.
FIGS. 9A and 9B are schematic views of examples of order processing performed by the computing device 1 according to some embodiments of the present disclosure.
FIG. 10 is a block diagram of the computing device according to some embodiments of the present disclosure.
FIG. 11 is a schematic view of the connection between the computing device and the network database according to some embodiments of the present disclosure.
FIG. 12 is a schematic view of mapping formats of information of orders by the computing device according to some embodiments of the present disclosure.
FIGS. 13A to 13G are flowchart diagrams of a computer-implemented method according to some embodiments of the present disclosure.
FIG. 14 is a flowchart diagram of a method according to some embodiments of the present disclosure.
FIG. 15 is a flowchart diagram of a method according to some embodiments of the present disclosure.

### DETAILED DESCRIPTION

Embodiments, or examples, of the disclosure illustrated in the drawings are now described using specific language. It shall be understood that no limitation of the scope of the disclosure is hereby intended. Any alteration or modification of the described embodiments, and any further applications of principles described in this document, are to be considered as normally occurring to one of ordinary skill in the art to which the disclosure relates. Reference numerals may be repeated throughout the embodiments, but this does not necessarily mean that feature(s) of one embodiment apply to another embodiment, even if they share the same reference numeral.

It shall be understood that, although the terms first, second, third, etc. may be used herein to describe various elements, components, regions, layers or sections, these elements, components, regions, layers or sections are not limited by these terms. Rather, these terms are merely used to distinguish one element, component, region, layer or section from another element, component, region, layer or section. Thus, a first element, component, region, layer or section discussed below could be termed a second element, component, region, layer or section without departing from the teachings of the present inventive concept.

The terminology used herein is for the purpose of describing particular example embodiments only and is not intended to be limited to the present inventive concept. As used herein, the singular forms "a," "an" and "the" are intended to include the plural forms as well, unless the context clearly indicates otherwise. It shall be further understood that the terms "comprises" and "comprising," when used in this specification, point out the presence of stated features, integers, steps, operations, elements, or components, but do not preclude the presence or addition of one or more other features, integers, steps, operations, elements, components, or groups thereof.

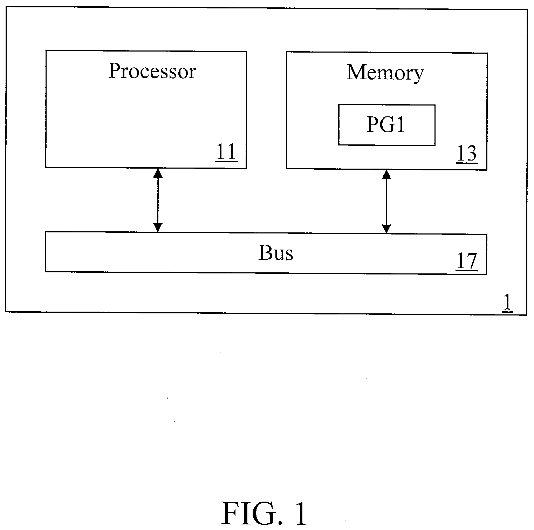

FIG. 1 illustrates a block diagram of a computing device 1 according to some embodiments of the present disclosure. The computing device 1 includes a processor 11 and a memory 13. The processor 11 and the memory 13 are electrically coupled through a communication bus 17.

The communication bus 17 may allow the processor 11 to execute a program PG1 stored in the memory 13. When executed, the program PG1 may generate one or more interrupts (e.g., software-interrupt) to cause the processor 11 to perform functions of the program PG1 for processing orders. The functions of the program PG1 will be further described hereinafter.

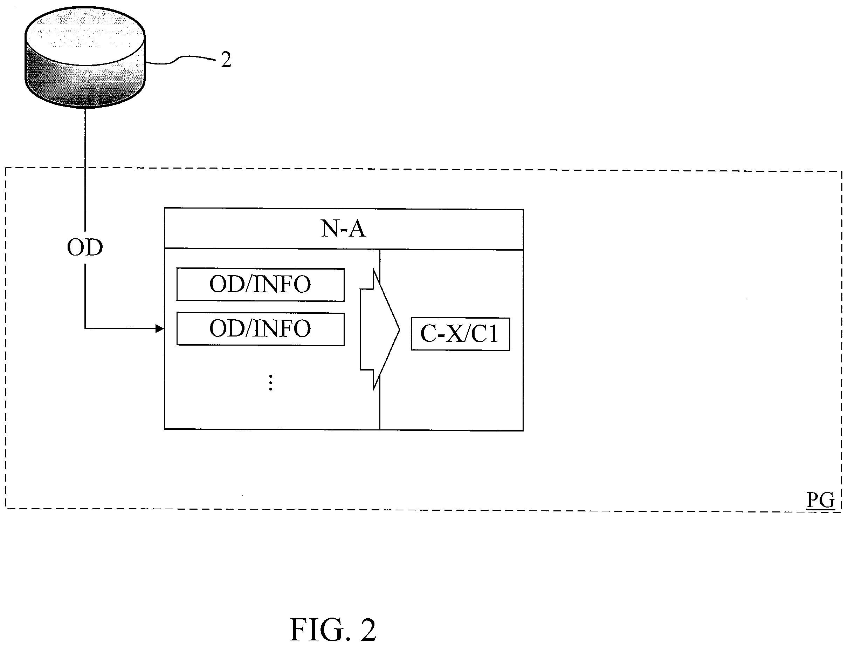

Please refer to FIG. 2, which illustrates a schematic view of order processing performed by the computing device 1 according to some embodiments of the present disclosure. In particular, information INFO of a plurality of orders OD may be stored in a storage device 2. The program PG1 may cause the processor 11 to retrieve the information INFO of the orders OD from the storage device 2. Next, the program PG1 may cause the processor 11 to input the information INFO of the orders OD into a node N-A of the program PG1 for processing the orders OD.

In some embodiments, the node N-A may be configured to trigger an operation when the information INFO of the orders OD meets a condition. In detail, the node N-A may be configured with a condition C-X. The condition C-X may be associated with an operation. When information INFO of the order OD meets the condition C-X, the operation may be triggered. More specifically, the condition C-X may be set with a criterion C1. The criterion C1 may be set to trigger the operation when the information INFO of the order OD matches the criterion C1.

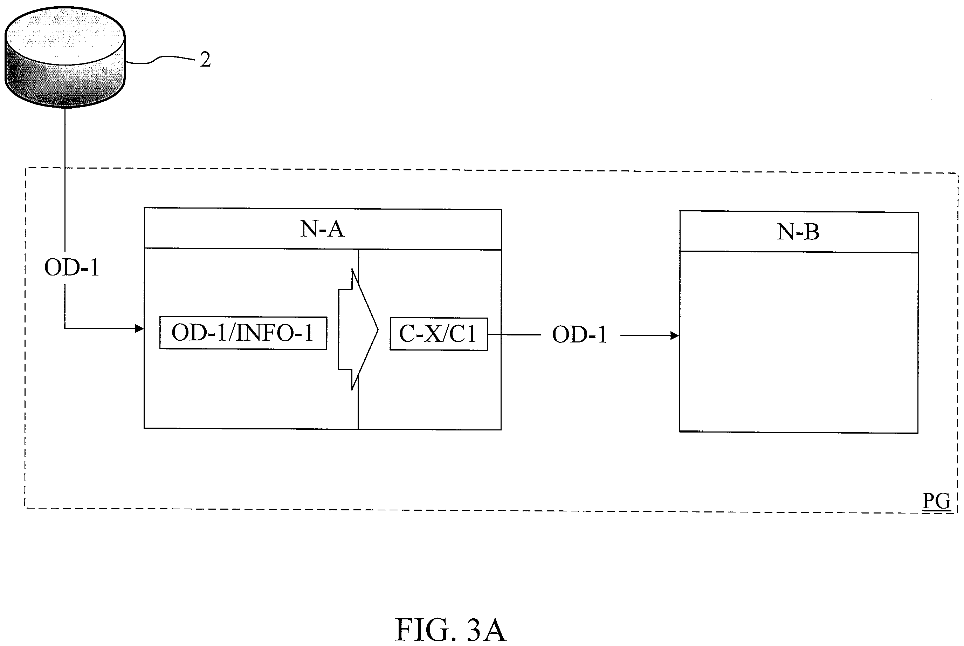

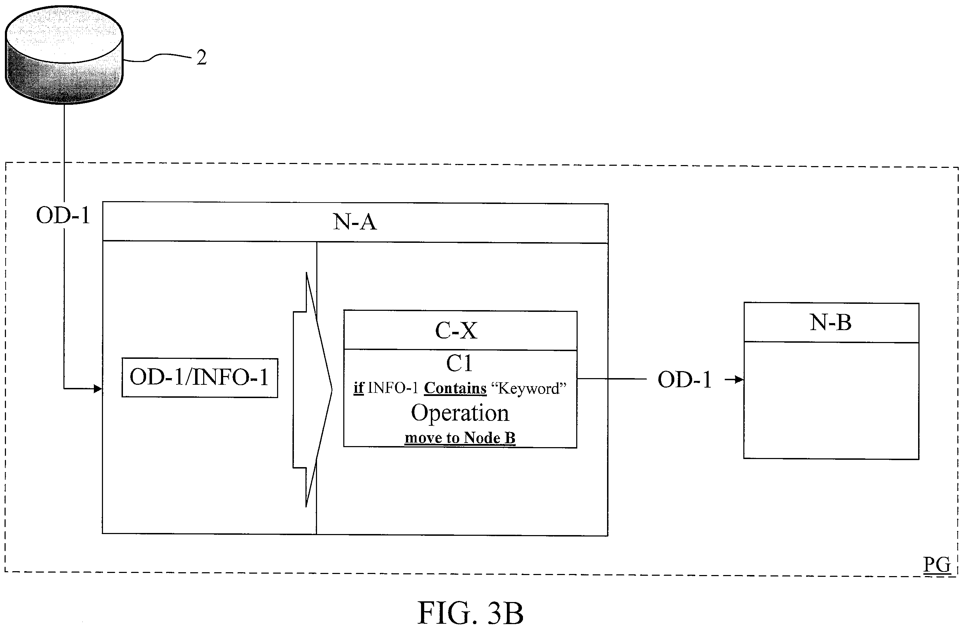

Please refer to FIGS. 3A and 3B. FIG. 3A illustrates a schematic view of order processing performed by the computing device 1 according to some embodiments of the present disclosure. FIG. 3B illustrates an example of order processing performed by the computing device 1 according to some embodiments of the present disclosure.

In particular, as shown in FIG. 3A, the node N-A may be configured to move an inputted order to a node N-B of the program PG1 when information of the inputted order meets the condition C-X. In detail, the condition C-X may be set with the criterion C1. The criterion C1 may be set to move the inputted order to the node N-B when the information of the inputted order matches the criterion C1.

Accordingly, after inputting information INFO-1 of an order OD-1 into the node N-A, the program PG1 may cause the processor 11 to determine whether the information INFO-1 of the order OD-1 matches the criterion C1 of the condition C-X. When the information INFO-1 of the order OD-1 matches the criterion C1 of the condition C-X, the program PG1 may cause the processor 11 to move the order OD-1 from the node N-A to the node N-B in response to the determination.

For example, as shown in FIG. 3B, the node N-A is configured with the condition C-X. The criterion C1 of the condition C-X is set to move an inputted order to the node N-B when a field of information of the inputted order contains the word "Keyword".

For instance, after inputting the information INFO-1 of the order OD-1 into the node N-A, the program PG1 may cause the processor 11 to determine whether a field of the information INFO-1 contains "Keyword". When the field of the information INFO-1 contains "Keyword", the program PG1 may cause the processor 11 to move the order OD-1 from the node N-A to the node N-B in response to the determination.

In some embodiments, the nodes N-A and N-B for processing orders may be established, arranged and configured before the order processing. In particular, when the program PG1 is running, the program PG1 may receive one or more node establishment instructions from a user. The program PG1 may cause the processor 11 to establish the nodes N-A and N-B in the program PG1 according to the node establishment instructions.

Next, the program PG1 may receive one or more node arrangement instructions from the user. The program PG1 may cause the processor 11 to arrange the nodes N-A and N-B in order in the program PG1 according to the node arrangement instructions.

Further, the program PG1 may receive one or more node configuration instructions from the user. The program PG1 may cause the processor 11 to configure the nodes N-A and N-B in the program

PG1 according to the node configuration instructions.

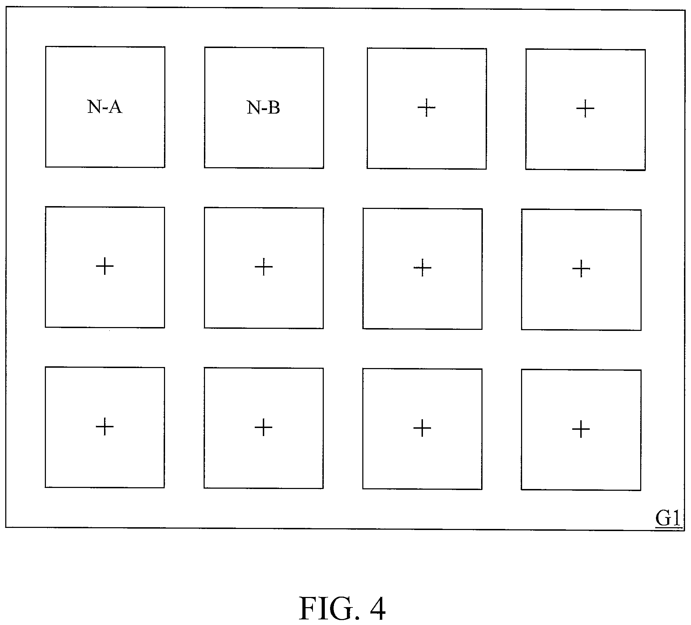

Please refer to FIG. 4, which illustrates an example of establishing and arranging nodes according to some embodiments of the present disclosure. For instance, the program PG1 may provide a Graphic User Interface (GUI) G1 for the user to establish and arrange nodes.

More specifically, as shown in FIG. 4, each slot with a symbol "+" is used for establishing a node. When the user clicks the symbol "+" of the slot, the program PG1 may cause the processor 11 to establish a node in the slot. In this example, the nodes N-A and N-B are established. After establishing the nodes N-A and N-B, the user may drag the nodes N-A and N-B to any slot for arranging the nodes N-A and N-B in a required order.

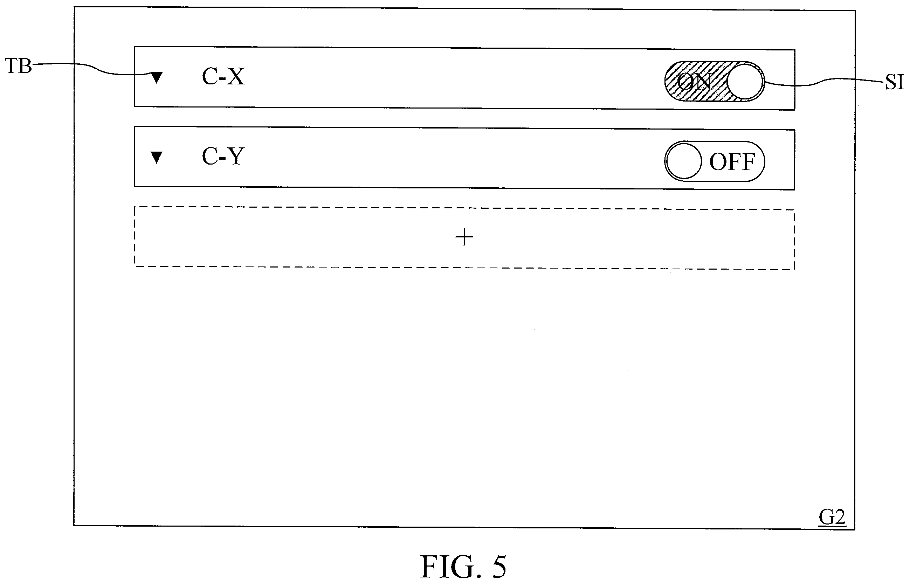

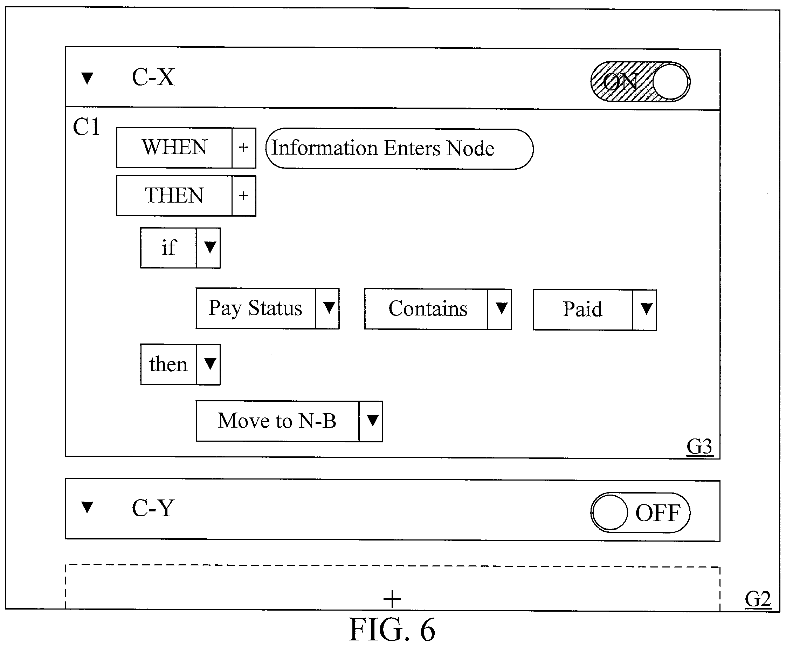

Please refer to FIGS. 5 and 6, which illustrate examples of configuring the node N-A according to some embodiments of the present disclosure. In particular, after establishing the node N-A, the user may click the node N-A to enter another GUI G2 provided by the program PG1 shown in FIG. 5.

Further, the GUI G2 shown in FIG. 5 may be utilized by the user to establish a condition for the node N-A. In detail, a dotted-line button with a symbol "+" may be used for establishing a condition. When the user clicks the dotted-line button with the symbol "+", the program PG1 may cause the processor 11 to establish a condition for the node N-A. In this example, conditions C-X and C-Y are established.

In some embodiments, each condition may have a switch SI for enabling the condition (e.g., by turning ON the switch) or disabling the condition (e.g., by turning OFF the switch). After establishing the condition C-X, the user may click an inverted triangle button TB of the condition C-X for expanding a GUI G3 as shown in FIG. 6 for configuring a criterion of the condition C-X.

More specifically, the GUI G3 shown in FIG. 6 may be utilized for the user to configure the criterion C1 for the condition C-X. In detail, several buttons for setting parameters of the criterion C1 may be provided in the GUI G3. A timing button "WHEN" may be utilized for the user to set a triggering timing of the criterion C1. An event button "THEN" may be utilized for the user to set an operation of the criterion C1.

More specifically, when the user clicks a symbol "+" of the timing button "WHEN", different timings (e.g., timing of information entering node, timing of information leaving node or timing of information being updated in node) may be provided for the user to set the criterion C1. In this example, the user sets a timing of information entering node for the timing button.

Next, when the user clicks a symbol "+" of the event button "THEN", sub-parameters may be provided for the user to set the operation. In this example, the user sets "if' as operator parameter, "Pay Status" as field under-checked parameter, "Contains" as decision parameter, and "Paid" as requirement parameter. Further, the user sets "then" as operator parameter and "Move to N-B" as action parameter. The configuration of the criterion C1 is completed after the parameters are set.

Based on the criterion C1 of the condition C-X of the node N-A in the example, when the information of the orders is inputted into the node N-A (i.e., when the information of the orders is entered into the node N-A), the program PG1 may cause the processor 11 to determine whether the information of each order matches the criterion C1.

In other words, the program PG1 may cause the processor 11 to determine whether the field "Pay Status" of the information of each order contains the word "Paid". If the field "Pay Status" of the information of the order contains "Paid", the order is moved to the node N-B.

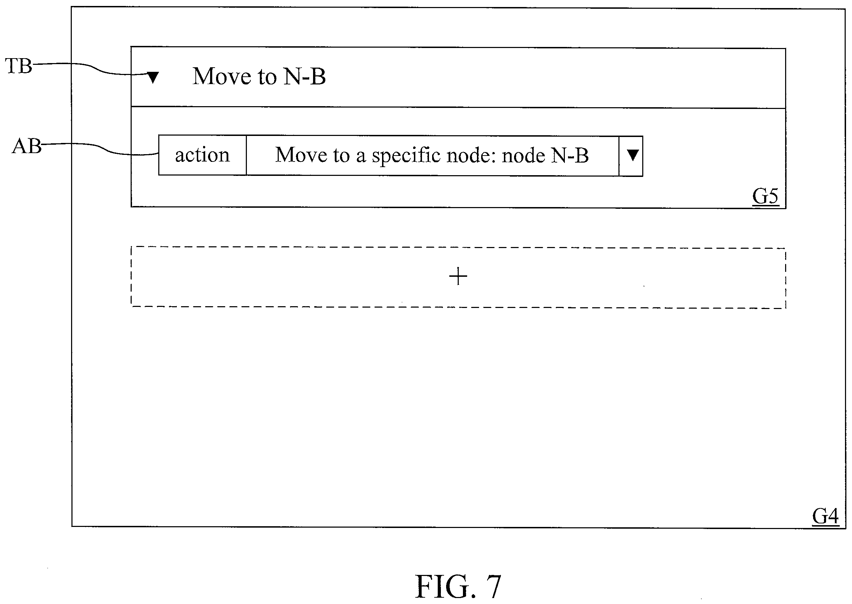

In some embodiments, action parameters for the user to set the criterion may be pre-configured. Please refer to FIG. 7, which illustrates an example of pre-configuring action parameters according to some embodiments of the present disclosure. For instance, the program PG1 may provide another GUI G4 for the user to create action parameters.

As shown in FIG. 7, each slot with a symbol "+" may be used for establishing an operation. When the user clicks the symbol "+" of the slot, the program PG1 may cause the processor 11 to create an action parameter in the slot. In this example, the action parameter of "Move to N-B" is created.

After creating the action parameter "Move to N-B", the user may click an inverted triangle button TB of the action parameter "Move to N-B" for expanding a GUI G5 as shown in FIG. 7 for configuring the action parameter "Move to N-B".

More specifically, when the user clicks an action button AB provided in the GUI G5, different actions (e.g., move to a specific node, add attribute, export node data, etc.) may be provided for the user to set the action parameter "Move to N-B". In this example, the user sets an action of moving to a specific node and sets the node N-B as the specific node.

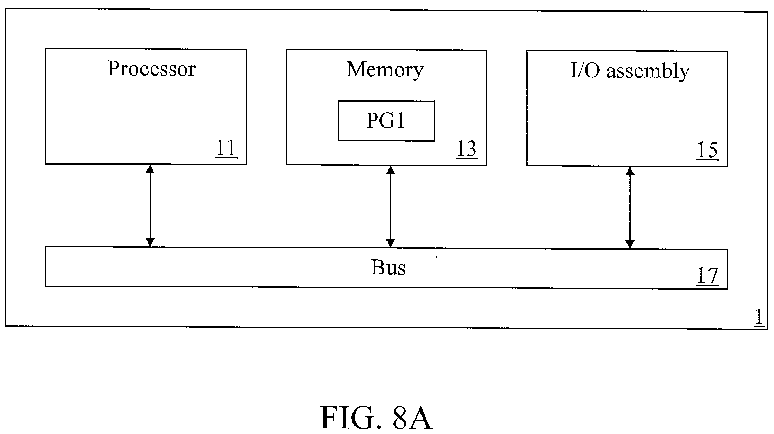

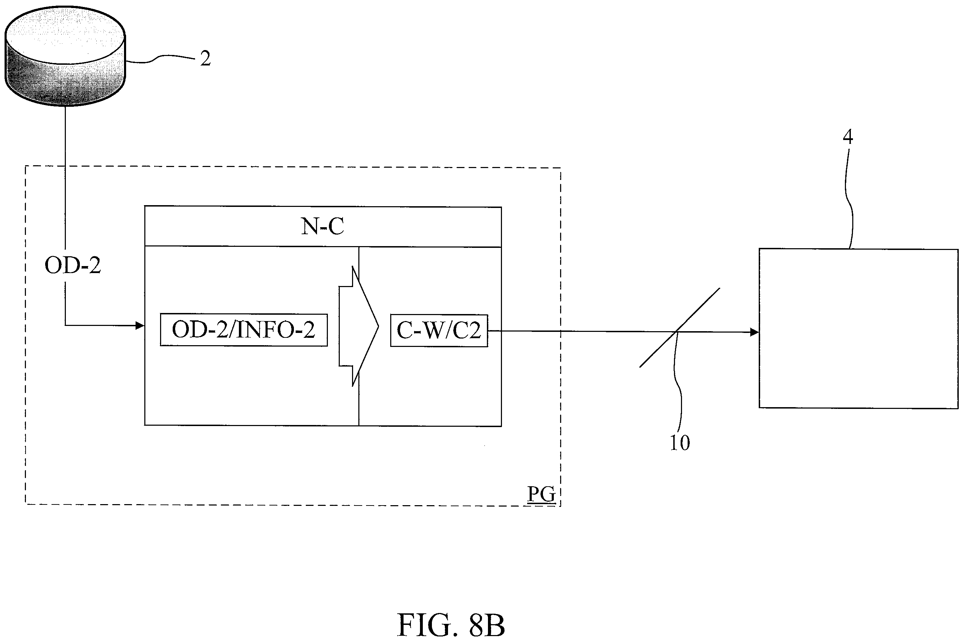

Please refer to FIGS. 8A and 8B. FIG. 8A illustrates a block diagram of the computing device 1 according to some embodiments of the present disclosure. FIG. 8B illustrates a schematic view of order processing performed by the computing device 1 according to some embodiments of the present disclosure.

In some embodiments, as shown in FIG. 8A, the computing device 1 further includes an I/O assembly 15. The processor 11, the memory 13 and the I/O assembly 15 are electrically coupled through the communication bus 17.

As shown in FIG. 8B, a node N-C may be configured to cause the processor 11 to transmit a control signal 10 to an apparatus 4 by the I/O assembly 15 when information of inputted order meets a condition C-W of the node N-C. In particular, the condition C-W may be set with a criterion C2. The criterion C2 may be set to transmit the control signal 10 to the apparatus 4 when the information of the inputted order matches the criterion C2.

Accordingly, in some embodiments, after inputting information INFO-2 of order OD-2 into the node N-C, the program PG1 may cause the processor 11 to determine whether the information INFO-2 of the order OD-2 matches the criterion C2 of the condition C-W. When the information INFO-2 of the order OD-2 matches the criterion C2 of the condition C-W, the node N-C of the program PG1 may cause the processor 11 to transmit the control signal 10 to the apparatus 4 by the I/O assembly 15 in response to the determination.

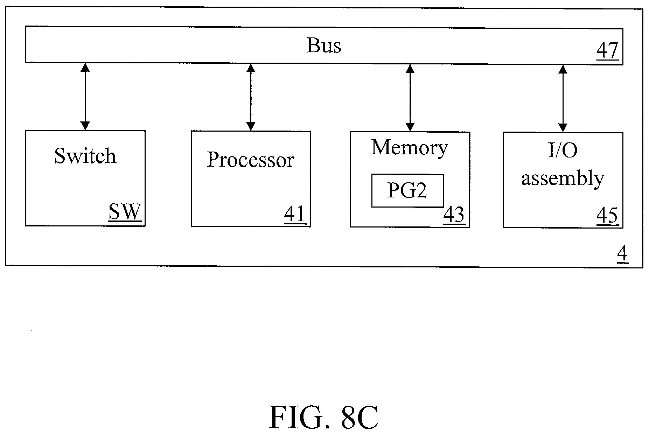

Please refer to FIG. 8C, which illustrates a block diagram of the apparatus 4 according to some embodiments of the present disclosure. The apparatus 4 may include a processor 41, a memory 43, an I/O assembly 45 and a switch SW. The processor 41, the memory 43, the I/O assembly 45 and the switch SW are electrically coupled through a communication bus 47.

The communication bus 47 may allow the processor 41 to execute a program PG2 stored in the memory 43. When executed, the program PG2 may cause the processor 41 to control the apparatus 4.

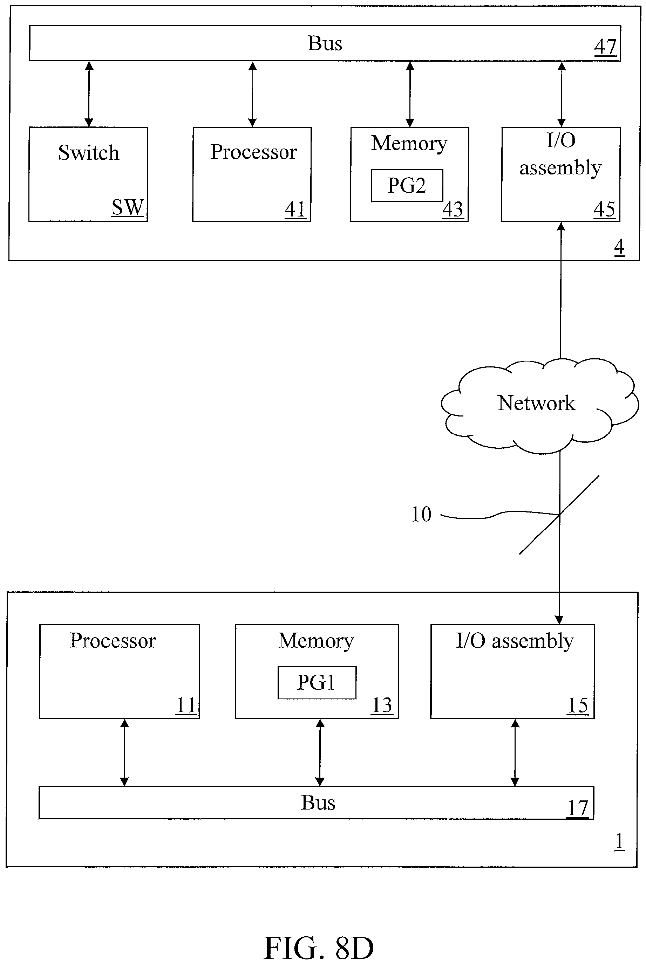

In some embodiments, as shown in FIG. 8D, the apparatus 4 may receive the control signal 10 from the computing device 1 via the I/O assembly 45 through network. After receiving the control signal 10, the program PG2 may cause the processor 41 to activate or inactivate the switch SW. In some embodiments, the I/O assembly 15 and the I/O assembly 45 may include wireless or wired network communication modules. The network may be wired network or wireless network.

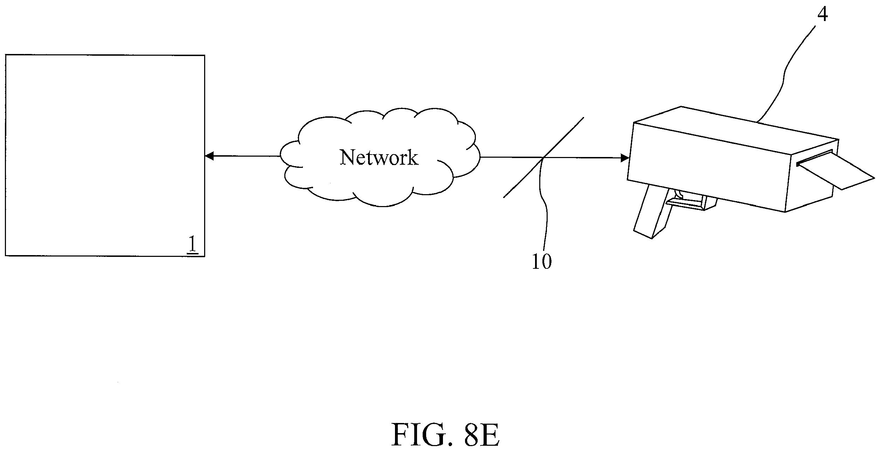

For example, the apparatus 4 may be a money gun as shown in FIG. 8E. The criterion C2 may be set to transmit the control signal 10 to the money gun when an accumulated sale amount is greater than a target turnover. Accordingly, when the information INFO-2 of the order OD-2 is inputted into the node N-C and the accumulated sale amount is determined to be greater than the target turnover, the node N-C of the program PG1 may cause the processor 11 to transmit the control signal 10 to the money gun. Subsequently, when the money gun receives the control signal 10, the switch of the money gun may be activated, and the money gun starts to spurt money.

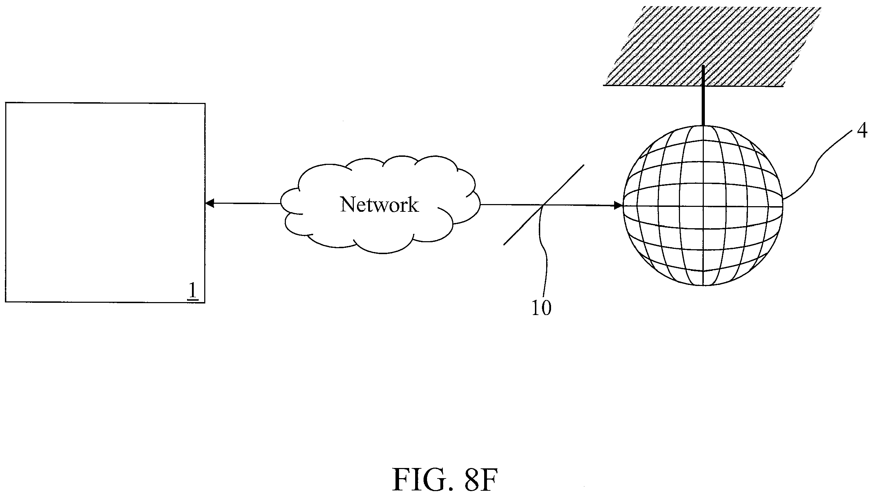

In another example, the apparatus 4 may be a disco ball as shown in FIG. 8F. The criterion C2 may be set to transmit the control signal 10 to the disco ball when an accumulated order number is greater than a target number. Accordingly, when the information INFO-2 of the order OD-2 is inputted into the node N-C and the accumulated order number is determined to be greater than the target number, the node N-C of the program PG1 may cause the processor 11 to transmit the control signal 10 to the disco ball. Subsequently, when the disco ball receives the control signal 10, the switch of the disco ball may be activated, and the disco ball starts to rotate.

In some embodiments, the processor 41, the memory 43 and the I/O assembly 45 of the apparatus 4 may be cooperatively functioned as a Programmable Logic Controller (PLC). The program PG2 stored in the memory 43 may be re-programmed by the user. Accordingly, the apparatus 4 may perform more complicated operations.

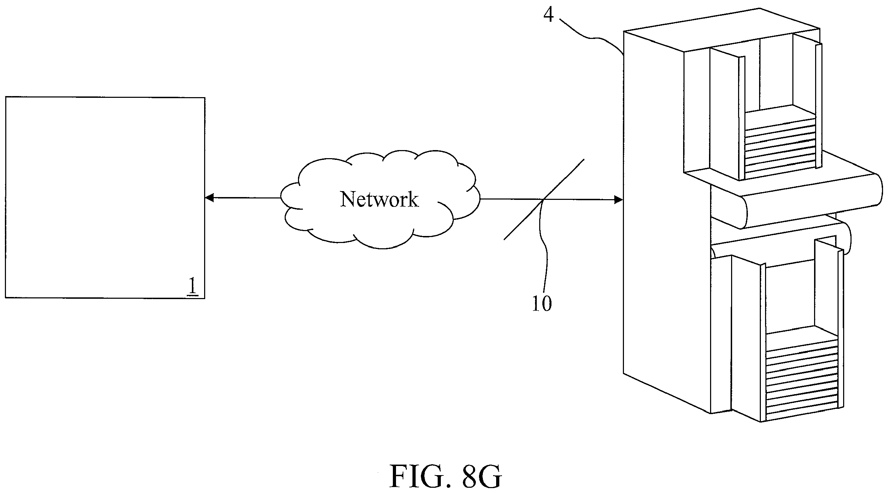

For example, the apparatus 4 may be a goods counting machine as shown in FIG. 8G. The criterion C2 may be set to transmit the control signal 10 to the goods counting machine when an accumulated order number is greater than a default number. Accordingly, when the information INFO-2 of the order OD-2 is inputted into the node N-C and the accumulated order number is determined to be greater than the default number, the node N-C of the program PG1 may cause the processor 11 to transmit the control signal 10 to the goods counting machine. Subsequently, when the goods counting machine receives the control signal 10, the switch of the goods counting machine may be activated, and the goods counting machine starts to count goods.

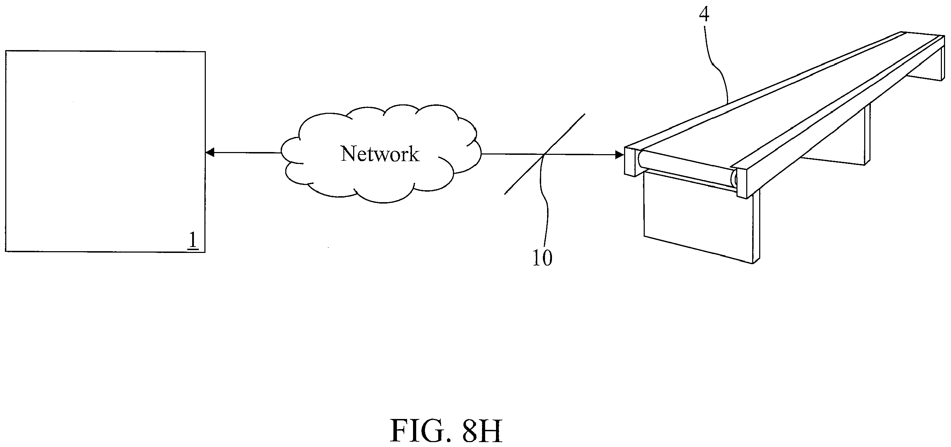

In another example, the apparatus 4 may be a conveyer as shown in FIG. 8H. The criterion C2 may be set to transmit the control signal 10 to the conveyer when an accumulated order number is greater than a default number. Accordingly, when the information INFO-2 of the order OD-2 is inputted into the node N-C and the accumulated order number is determined to be greater than the default number, the node N-C of the program PG1 may cause the processor 11 to transmit the control signal 10 to the conveyer. Subsequently, when the conveyer receives the control signal 10, the switch of the conveyer may be activated, and the conveyer starts to convey goods.

In some embodiments, the I/O assembly 15 of the computing device 1 and the I/O assembly 45 of the apparatus 4 may include wireless communication modules. The I/O assembly 15 of the computing device 1 and the I/O assembly 45 of the apparatus 4 may communicate with each other wirelessly according to a wireless network protocol such as Message Queuing Telemetry Transport (mqtt).

In some embodiments, the information of the order may include several fields. For instance, the information may include: "Order Number" field, "Name" field, "Address" field, "Cellphone Number" field, "Email" field, "Pay Status" field, "Pay Method" field, etc.

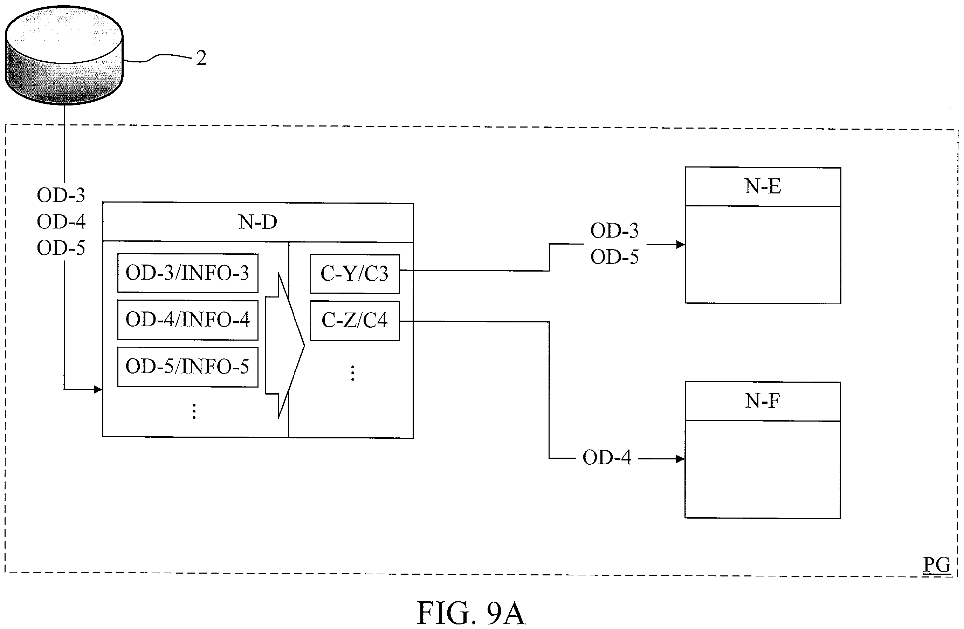

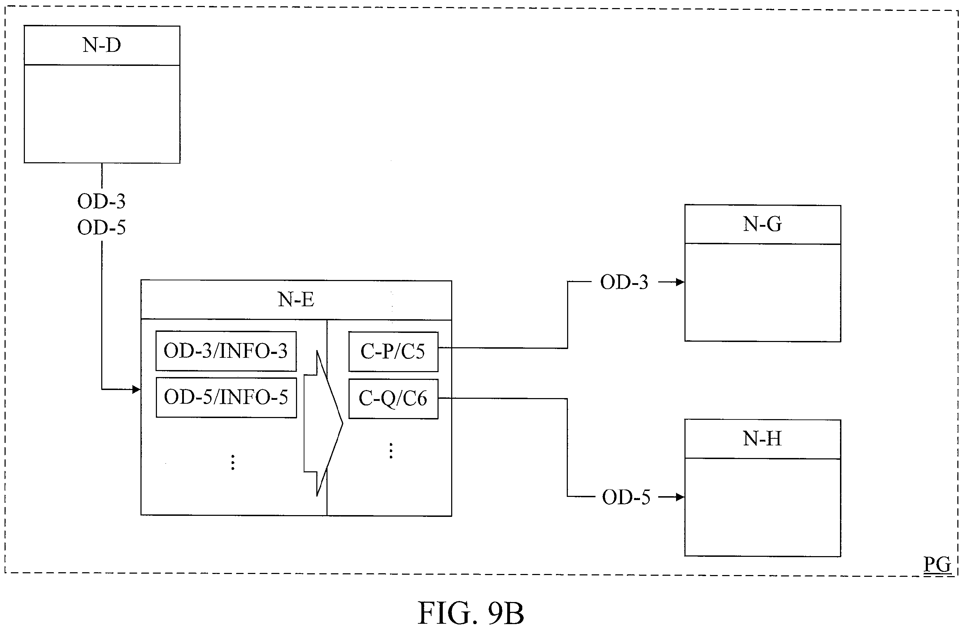

Please refer to FIGS. 9A and 9B, which illustrate an example of order processing performed by the computing device 1 according to some embodiments of the present disclosure. As shown in FIG. 9A, a node N-D of the program PG1 is configured with conditions C-Y and C-Z. A criterion C3 of the condition C-Y is set to move an inputted order into a node N-E of the program PG1 when the "Address" field of information of order contains "US". A criterion C4 of the condition C-Z is set to move an inputted order into a node N-F of the program PG1 when the "Address" field of information of order contains "GB".

In some embodiments, when the program PG1 causes the processor 11 to retrieve information INFO-3, INFO-4, INFO-5 of orders OD-3, OD-4, OD-5 from the storage device 2, the program PG1 may then cause the processor 11 to input the information INFO-3, INFO-4, INFO-5 of orders OD-3, OD-4, OD-5 into the node N-D of the program PG1.

After inputting the information INFO-3, INFO-4, INFO-5 of orders OD-3, OD-4, OD-5 into the node N-D, the program PG1 may cause the processor 11 to determine whether the information INFO-3, INFO-4, INFO-5 of orders OD-3, OD-4, OD-5 matches the criterion C3 of the condition C-Y.

In some embodiments, the "Address" fields of the information INFO-3 and INFO-5 contain "US". Therefore, the processor 11 may determine that the information INFO-3 and INFO-5 of the orders OD-3 and OD-5 matches the criterion C3 of the condition C-Y. Next, the program PG1 may cause the processor 11 to move the orders OD-3 and OD-5 from the node N-D to the node N-E in response to the determination.

In some embodiments, since the "Address" field of the information INFO-4 of the order OD-3 does not contain "US", the program PG1 may cause the processor 11 to determine whether the information INFO-4 of the order OD-4 matches a next criterion of a next condition, which is the criterion C4 of the condition C-Z.

In some embodiments, the "Address" field of the information INFO-4 contains "GB". Therefore, the processor 11 may determine that the information INFO-4 of the order OD-4 matches the criterion C4 of the condition C-Z. Next, the program PG1 may cause the processor 11 to move the order OD-4 from the node N-D to the node N-F in response to the determination.

As shown in FIG. 9B, the node N-E of the program PG1 is configured with conditions C-P and C-Q. A criterion C5 of the condition C-P is set to move an inputted order into a node N-G of the program PG1 when a "Pay Status" field of information of order contains the word "Paid". A criterion C6 of the condition C-Q is set to move the inputted order into a node N-H of the program PG1 when the "Pay Status" field of information of order contains "Pending".

In some embodiments, after inputting the information INFO-3 and INFO-5 of the orders OD-3 and OD-5 into the node N-E, the program PG1 may cause the processor 11 to determine whether the information INFO-3 and INFO-5 of the orders OD-3 and OD-5 matches the criterion C5 of the condition C-P.

In some embodiments, the "Pay Status" field of the information INFO-3 contains "Paid". Therefore, the processor 11 may determine that the information INFO-3 of the order OD-3 matches the criterion C5 of the condition C-P. Next, the program PG1 may cause the processor 11 to move the order OD-3 from the node N-E to the node N-G in response to the determination.

In some embodiments, since the "Pay Status" field of the information INFO-5 of the order OD-5 does not contain "Paid", the program PG1 may cause the processor 11 to determine whether the information INFO-5 of the order OD-5 matches a next criterion of a next condition, which is the criterion C6 of the condition C-P.

In some embodiments, the "Pay Status" field of the information INFO-5 contains "Pending". Therefore, the processor 11 may determine that the information INFO-5 of the order OD-5 matches the criterion C6 of the condition C-Q. Next, the program PG1 may cause the processor 11 to move the order OD-5 from the node N-E to the node N-H in response to the determination.

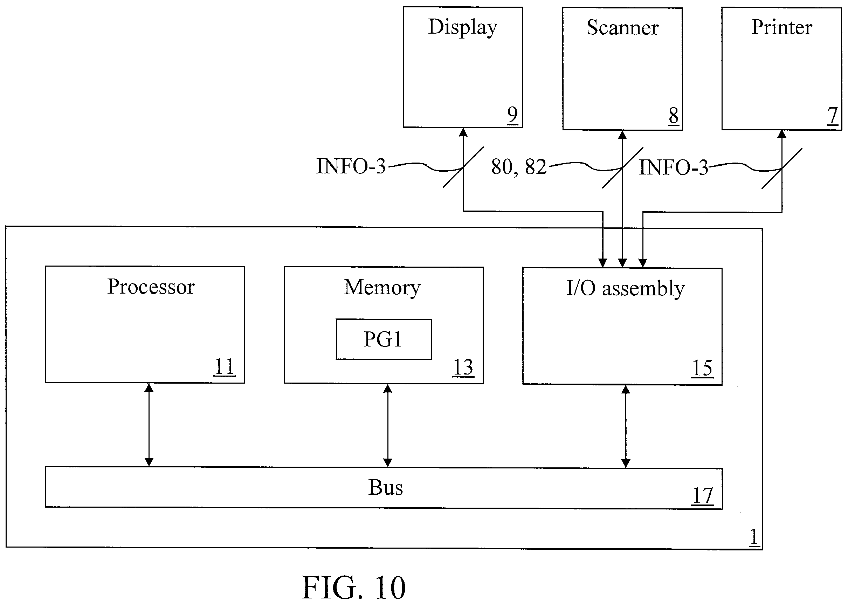

FIG. 10 illustrates a block diagram of the computing device 1 according to some embodiments of the present disclosure. In these embodiments, the computing device 1 may connect with a display 9, a scanner 8 and a printer 7 via the I/O assembly 15.

In some embodiments, orders in the node N-G may be ready for shipment. When the program PG1 is running, the program PG1 may cause the processor 11 to display the orders in the node N-G on the display 9. For example, the program PG1 may cause the processor 11 to display the information INFO-3 of the order OD-3 on the display 9.

Further, the information INFO-3 of the order OD-3 may include an item data of an item. The display 9 may show the item data of the item of the information INFO-3. Accordingly, an operator may pick the item indicated by the information INFO-3 of the order OD-3 in a storehouse based on the item data shown on the display 9.

Next, the operator may use the scanner 8 (e.g., barcode scanner) to scan an item code (e.g., barcode) on the item. After scanning the item code, the scanner 8 may transmit a scan signal 80 to the computing device 1. Subsequently, the computing device 1 may receive the scan signal 80 from the scanner 8 via the I/O assembly 15.

After receiving the scan signal 80, the program PG1 may cause the processor 11 to update the item data for indicating that the corresponding item is picked. When all items of the order OD-3 are picked and packed in a package, the operator may manipulate the program PG1 to cause the processor 11 to transmit part of the information INFO-3 (e.g., address, name and cellphone number) of the order OD-3 to the printer 7 via the I/O assembly 15. The printer 7 may print part of the information INFO-3 on a shipping label for the operator to apply to the package.

In some embodiments, the computing device 1 may search for information of an order for a specific item which is included in an order. In particular, a specific item code may be generated for a specific item (e.g., a customized item). The specific item code may be associated with information of an order which includes the specific item.

Accordingly, when the operator uses the scanner 8 to scan the specific item code on the specific item, the scanner 8 may transmit a scan signal 82 to the computing device 1. Subsequently, after receiving the scan signal 82 from the scanner 8 via the I/O assembly 15, the program PG1 may cause the processor 11 to search for information of an order associated with the specific item. When the information of the order that includes the specific item is found, the program PG1 may cause the processor 11 to display the information of the order on the display 9 via the I/O assembly 15.

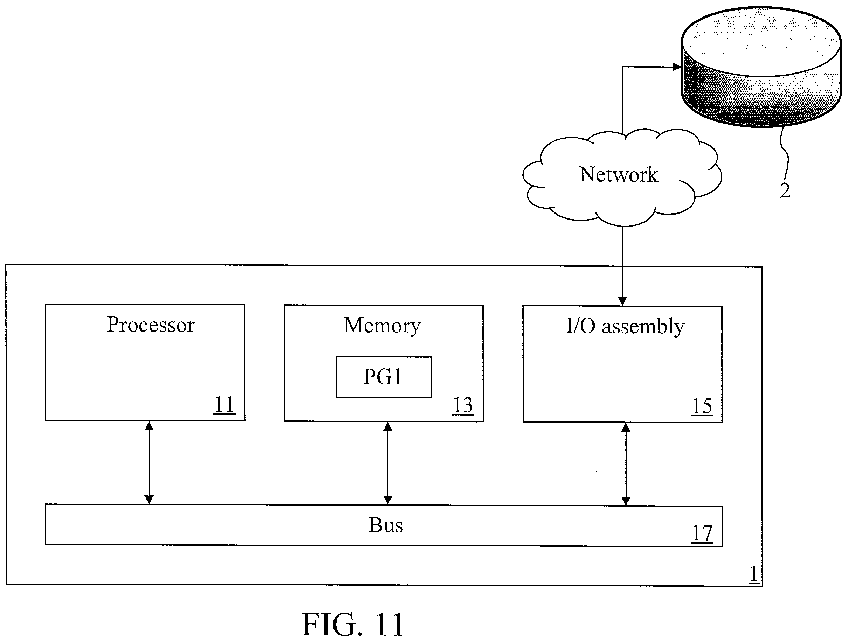

In some embodiments, the storage device 2 may be included in the computing device 1. In some embodiments, as shown in FIG. 11, the storage device 2 may be a network database. The computing device 1 may connect with the network database via the I/O assembly 15 through a network.

In some embodiments, a format of information of an order retrieved from the network database may be different from a format of information of an order used in the program PG1. Therefore, information of the order retrieved from the network database may be mapped to information of the order used in the program PG1.

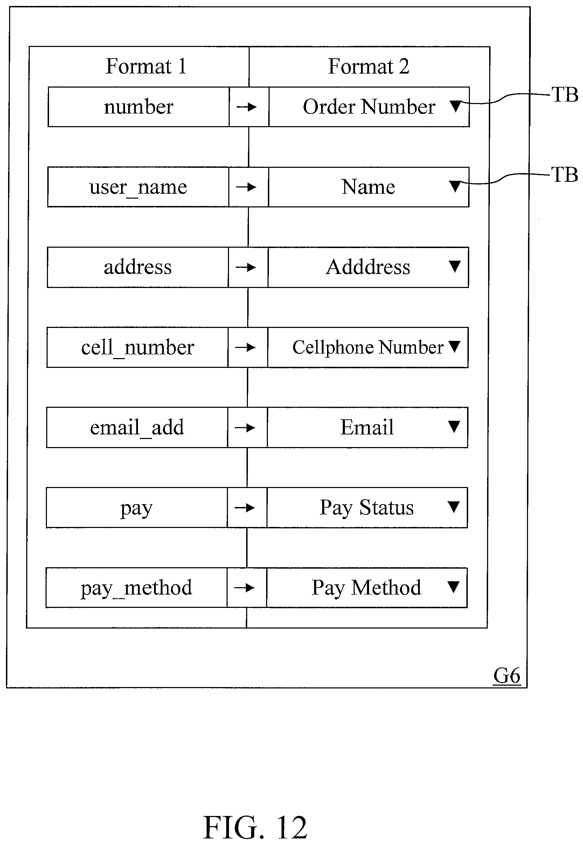

Please refer to FIG. 12, which illustrates a schematic view of mapping formats of information of orders by the computing device 1 according to some embodiments of the present disclosure. In particular, columns of Format 1 may be parsed from information of an order retrieved from the network database. Columns of Format 2 may be the fields of information of an order used in the program PG1 of the present disclosure.

More specifically, when the information of the order is retrieved from the network database, the program PG1 may cause the computing device 1 to parse the information into Format 1 which includes number, user_name, address, cell_number, email_add, pay and pay_method.

Next, the program PG1 may provide a GUI G6 for mapping Format 1 to Format 2. In detail, in GUI G6, each column of Format 2 may be set as one of the fields, which include "Order Name", "Name", "Address", "Cellphone Number", "Email", "Pay Status" and "Pay Method", of the information of the order used in the program PG1.

For example, for the first column of Format 2, the user may click an inverted triangle button TB to select a field from "Order Name", "Name", "Address", "Cellphone Number", "Email", "Pay Status" and "Pay Method" for mapping the first column "number" of Format 1. In this example, the user may set this column as field "Order Number" for mapping the first column "number" of Format 1.

Similarly, for the second column of Format 2, the user may click an inverted triangle button TB to select a field from "Order Name", "Name", "Address", "Cellphone Number", "Email", "Pay Status" and "Pay Method" for mapping the second column "user_name" of Format 1. In this example, the user may set this column as field "Name" for mapping the second column "user_name" of Format 1. After setting all the columns of Format 2 to map the columns of Format 1, the subsequent retrieved information with Format 1 may be mapped to the information with Format 2 accordingly.

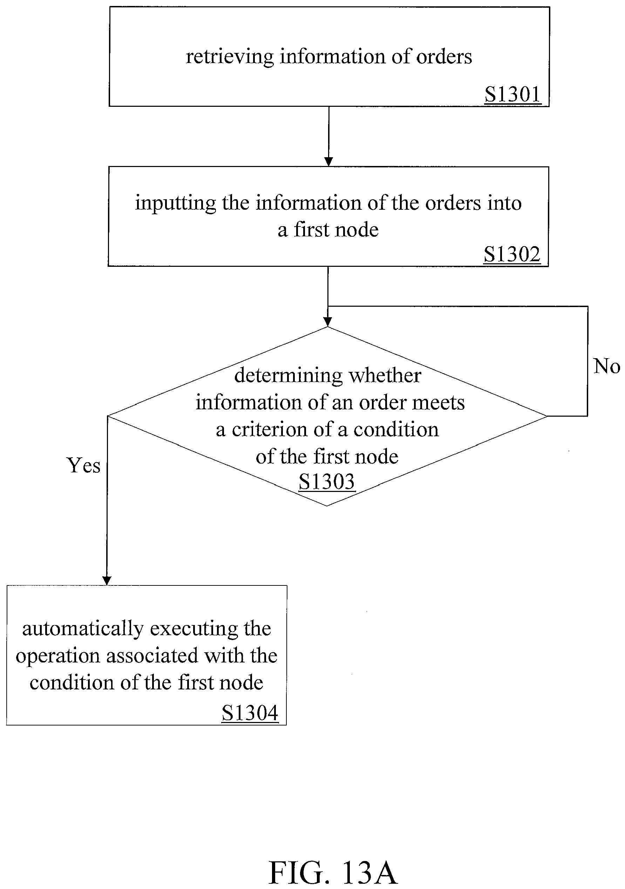

Some embodiments of the present disclosure include a computer-implemented method, and flowchart diagrams thereof are shown in FIGS. 13A to 13G. The computer-implemented method of some embodiments is for use in a computing device (e.g., the computing device of the aforesaid embodiments). Detailed steps of the computer-implemented method are described below.

Step S1301 is executed, by a processor of the computing device, to retrieve information of a plurality of orders. The information of the orders may be stored in a storage device. Step S1302 is executed, by the processor, to input the information of the orders into a first node. A condition of the first node may be associated with an operation.

Step S1303 is executed, by the processor, to determine whether information of an order meets a criterion of the condition. When the information of the order meets the criterion of the condition, step S1304 is executed, by the processor, to automatically perform the operation associated with the condition of the first node. When the information of the order does not meet the criterion of the condition, step S1303 is executed, by the processor, to determine whether information of a next order meets the criterion of the condition.

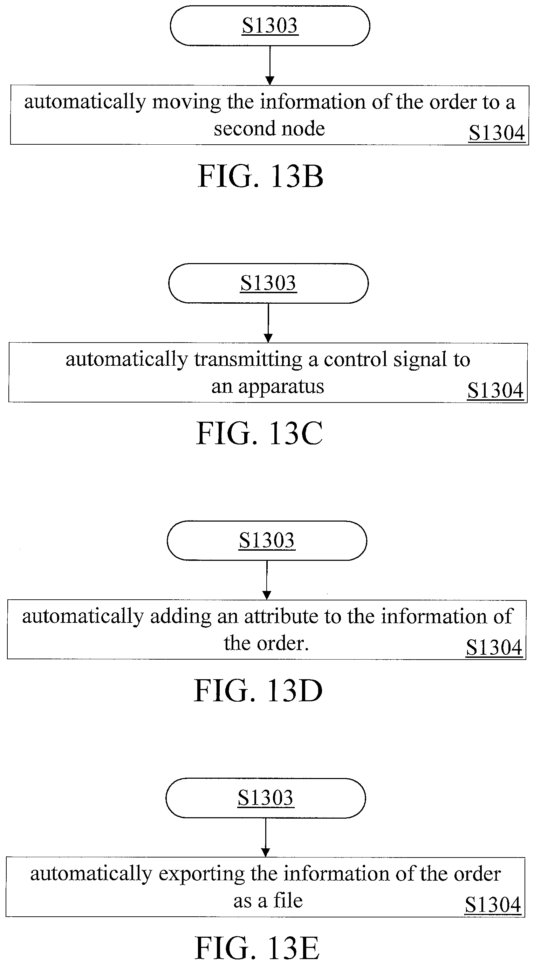

In some embodiments, as shown in FIG. 13B, when the information of the order meets the criterion of the condition, step S1304 may be executed, by the processor, to move the information of the order to a second node.

In some embodiments, as shown in FIG. 13C, when the information of the order meets the criterion of the condition, step S1304 may be executed, by the processor, to transmit a control signal to an apparatus via an I/O assembly through a network for controlling the apparatus.

In some embodiments, as shown in FIG. 13D, when the information of the order meets the criterion of the condition, step S1304 may be executed, by the processor, to add an attribute to the information of the order.

In some embodiments, as shown in FIG. 13E, when the information of the order meets the criterion of the condition, step S1304 may be executed, by the processor, to export the information of the order as a file.

In some embodiments, the condition of the first node may be pre-configured to be associated with at least one of the above operations. More specifically, the condition of the first node may be pre-configured to trigger at least one of the above operations when the information of the order inputted in the first node meets the criterion of the condition. In some embodiments, the first node and the second node may be established and arranged in order before being utilized.

In some embodiments, the computer-implemented method may further include steps for achieving different functions. In particular, some functions for facilitating the procedure of shipping may be implemented.

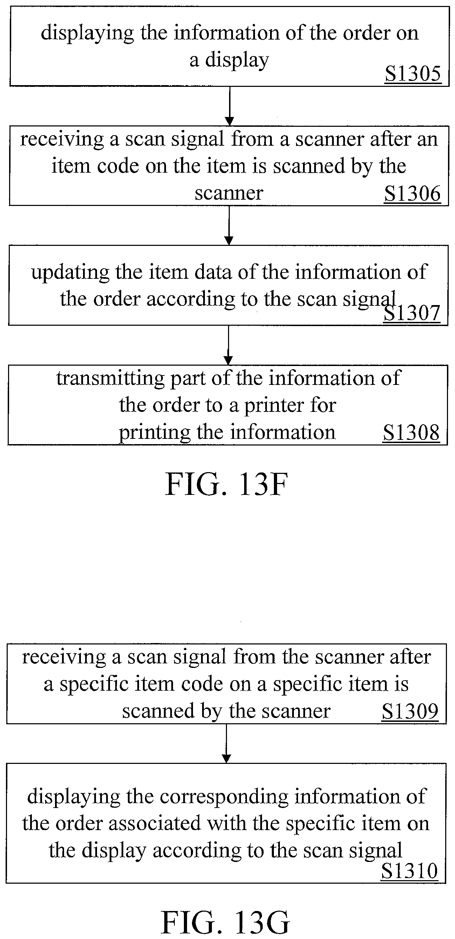

As shown in FIG. 13F, step S1305 is executed, by the processor, to display the information of the order on a display via an I/O assembly of the computing device, which is connected to the display. The information of the order may include an item data of an item. Next, an operator may pick the item indicated by the information of the order in a storehouse based on the item data shown on the display.

Next, the operator may use a scanner to scan an item code on the item. The I/O assembly of the computing device may connect to the scanner. After scanning the item code, the scanner may transmit a scan signal to the computing device via the I/O assembly. Subsequently, step S1306 is executed, by the processor, to receive the scan signal from the scanner via the I/O assembly after an item code on the item is scanned by the scanner.

Step S1307 is executed to update, by the processor, the item data of the information of the order according to the scan signal. When all items of the order are picked and packed in a package, the operator may direct the computing device to print a shipping label.

Step S1308 is executed, by the processor, to transmit part of the information of the order to a printer via the I/O assembly, connected to the printer, for printing the information after the item data is updated. The printer may print part of the information on a shipping label.

In some embodiments, the computer-implemented method may further include steps for achieving different functions. In particular, some functions of searching for information of an order for a specific item may be implemented.

In detail, a specific item code of the specific item may be associated with the corresponding information of the order. When the operator uses the scanner to scan the specific item code on the specific item, the scanner may transmit a scan signal to the computing device.

As shown in FIG. 13G, step S1309 is executed to, by the processor, receive a scan signal from the scanner after the specific item code on the specific item is scanned by the scanner. Step S1310 is executed, by the processor, to display the corresponding information of the order associated with the specific item via the display according to the scan signal.

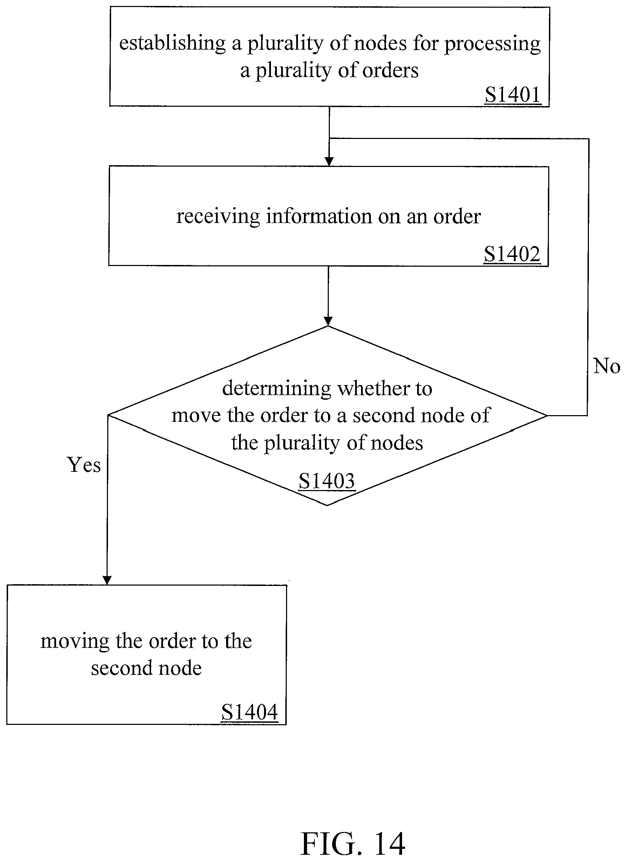

Some embodiments of the present disclosure include a method, and a flowchart diagram thereof is shown in FIG. 14. The method of some embodiments is for use in a computing device (e.g., the computing device of the aforesaid embodiments). Detailed steps of the computer-implemented method are described below.

Step S1401 is executed, by a program stored in a memory of the computing device, to establish a plurality of nodes for processing a plurality of orders. One or more of the plurality of nodes may be assigned to process orders. Step S1402 is executed, by a first node of the plurality of nodes, to receive information of an order. The first node may be configured to move orders to other nodes based on whether the information meets a condition that identifies a certain status associated with the other nodes and the order.

Step S1403 is executed, by the first node, to determine whether to move the order to a second node of the plurality of nodes based on whether the information of the order matches a criterion of the condition that identifies the certain status associated with the second node and the order.

When the information of the order matches the criterion of the condition that identifies the certain status associated with the second node and the order, step S1404 is executed, by the first node responsive to the determination, to move the order to the second node.

When the information of the order does not match the criterion of the condition that identifies the certain status associated with the second node and the order, step S1402 is executed, by the first node, to receive information of a next order.

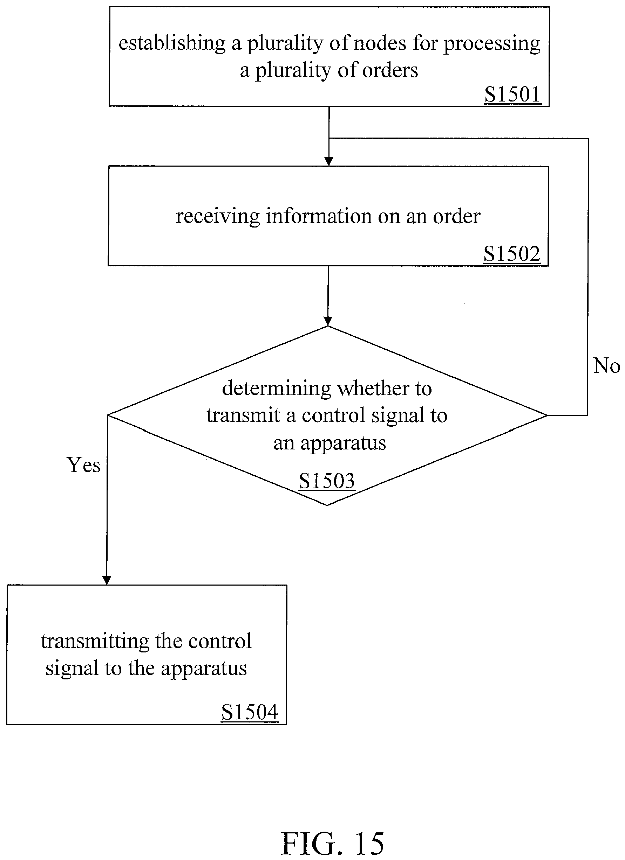

Some embodiments of the present disclosure include a method, and flowchart diagram thereof is shown in FIG. 15. The method of some embodiments is for use in a computing device (e.g., the computing device of the aforesaid embodiments). Detailed steps of the computer-implemented method are described below.

Step S1501 is executed, by a program stored in a memory of the computing device, to establish a plurality of nodes for processing a plurality of orders. One or more of the plurality of nodes may be assigned to process orders. Step S1502 is executed, by a first node of the plurality of nodes, to receive information of an order. The first node may be configured to transmit a control signal to an apparatus based on whether the information meets a condition that identifies a certain status associated with the apparatus and the order.

Step S1503 is executed, by the first node, to determine whether to transmit the control signal to the apparatus based on whether the information of the order matches a criterion of the condition that identifies the certain status associated with the apparatus and the order.

When the information of the order matches the criterion of the condition that identifies the certain status associated with the apparatus and the order, step S1504 is executed, by the program responsive to the determination, to transmit the control signal to the apparatus.

When the information of the order does not match the criterion of the condition that identifies the certain status associated with the apparatus and the order, step S1503 is executed, by the first node, to receive information of a next order.

It shall be particularly appreciated that the processors mentioned in the above embodiments may be a central processing unit (CPU), other hardware circuit elements capable of executing relevant instructions, or combination of computing circuits that are well-known by those skilled in the art based on the above disclosures.

Moreover, the I/O assembly mentioned in the above embodiments may include an I/O port for connecting to the display, an I/O port for connecting the scanner and an I/O port for connecting to the printer. Further, the I/O assembly may include a network interface for connecting to the display, the scanner, the printer and the apparatus. The network interface may be a combination of a network data transmitter and a network data receiver. The memories mentioned in the above embodiments may be memories, such as ROM, RAM, etc., or storing unit, such as flash memory, HDD, SSD, etc., for storing data.

Further, the communication buses mentioned in the above embodiments may include a communication interface for transferring data between the elements, such as the processor, the memory, the I/O assembly, the network interface and the switch, and may include electrical bus interface, optical bus interface or even wireless bus interface. However, such description is not intended to limit the hardware implementation embodiments of the present disclosure.

Although the present disclosure and its advantages have been described in detail, it should be understood that various changes, substitutions and alterations can be made herein without departing from the spirit and scope of the disclosure as defined by the appended claims. For example, many of the processes discussed above can be implemented in different methodologies and replaced by other processes, or a combination thereof.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

## Claims

1. A computer-implemented method for automatically executing a workflow of processing a plurality of orders, comprising:
retrieving, by a processor, information of a first order of the plurality of orders, wherein the information of the first order is stored in a storage device;
inputting, by the processor, the information of the first order into a first node, wherein a condition of the first node is associated with an operation;
determining, by the processor, whether the information of the first order meets a criterion of the condition; and
automatically executing, by the processor, the operation when the information of the first order meets the criterion of the condition.

2. The method of Claim 1, further comprising:
establishing, by the processor, the first node and a second node;
arranging, by the processor, for the first node and the second node in order;
configuring, by the processor, the condition of the first node to be associated with the operation;
wherein automatically executing the operation further comprises:
automatically executing, by the processor, the operation to move the information of the first order to the second node when the information of the first order meets the criterion of the condition.

3. The method of Claim 1, further comprising:
configuring, by the processor, the condition of the first node to be associated with the operation;
wherein automatically executing the operation further comprises:
automatically executing, by the processor, the operation to transmit a control signal to an apparatus via an I/O assembly through network for controlling the apparatus when the information of the first order meets the criterion of the condition.

4. The method of Claim 1, further comprising:
displaying, by the processor, the information of the first order on a display via an I/O assembly, wherein the information of the first order comprises an item data of an item;
receiving, by the processor, a scan signal from a scanner via the I/O assembly after an item code on the item is scanned by the scanner;
updating, by the processor, the item data according to the scan signal;
transmitting, by the processor, the information of the first order to a printer via the I/O assembly for printing the information after the item data is updated.

5. The method of Claim 1, wherein the information of the first order is associated with an item code of an item, and the method further comprises:
receiving, by the processor, a scan signal from a scanner after the item code on the item is scanned by the scanner; and
displaying, by the processor, the information of the first order associated with the item via a display according to the scan signal.

6. The method of Claim 1, further comprising:
configuring, by the processor, the condition of the first node to be associated with the operation;
wherein automatically executing the operation further comprises:
automatically executing, by the processor, the operation to: add an attribute to the information of the first order when the information of the first order meets the criterion of the condition; or to export the information of the first order as a file when the information of the first order meets the criterion of the condition.

7. A computing device, comprising:
a processor; and
a memory storing a program that, when being executed, causes the processor to:
retrieve information of a first order of the plurality of orders, wherein the information of the first order is stored in a storage device;
input the information of the first order into a first node, wherein a condition of the first node is associated with an operation;
determine whether the information of the first order meets a criterion of the condition; and
automatically execute the operation when the information of the first order meets the criterion of the condition.

8. The computing device of Claim 7, wherein the program, when being executed, further causes the processor to:
establish the first node and a second node;
arrange for the first node and the second node in order;
configure the condition of the first node to be associated with the operation;
automatically execute the operation to move the information of the first order to the second node when the information of the first order meets the criterion of the condition.

9. The computing device of Claim 7, further comprising an I/O assembly, wherein the program, when being executed, further causes the processor to:
configure the condition of the first node to be associated with the operation;
automatically execute the operation to transmit a control signal to an apparatus via the I/O assembly through network for controlling the apparatus when the information of the first order meets the criterion of the condition.

10. The computing device of Claim 7, further comprising an I/O assembly, wherein the program, when being executed, further causes the processor to:
display the information of the first order on a display via the I/O assembly, wherein the information of the first order comprises an item data of an item;
receive a scan signal from a scanner via the I/O assembly after an item code on the item is scanned by the scanner;
update the item data according to the scan signal;
transmit the information of the first order to a printer via the I/O assembly for printing the information after the item data is updated.

11. The computing device of Claim 7, further comprising an I/O assembly, wherein the information of the first order is associated with an item code of an item, and the program, when being executed, further causes the processor to:
receive a scan signal from a scanner after the item code on the item is scanned by the scanner; and
display the information of the first order associated with the item via a display according to the scan signal.

12. The computing device of Claim 7, wherein the program, when being executed, further causes the processor to:
configure the condition of the first node to be associated with the operation;
automatically execute the operation to: add an attribute to the information of the first order when the information of the first order meets the criterion of the condition; or to export the information of the order as a file when the information meets the criterion of the condition.

13. An apparatus, comprising:
a processor;
an I/O assembly;
a switch; and
a memory storing a program that, when being executed, causes the processor to:
receive a control signal from a computing device of Claim 11 via the I/O assembly through network;
active the switch according to the control signal.

14. A method for automatically executing a workflow across a plurality of nodes, the method comprising:
establishing, by a program, a plurality of nodes for processing a plurality of orders, one or more of the plurality of nodes assigned to process orders;
receiving, by a first node of the plurality of nodes, information on an order, the first node configured to move orders to other nodes based on the information meeting a condition that identifies a certain status associated with the other nodes and the order;
determining, by the first node, to move the order to a second node of the plurality of nodes based on the information of the order matching a criterion of the condition that identifies the certain status associated with the second node and the order; and
moving, by the first node responsive to the determination, the order to the second node.

15. A method for automatically executing a workflow across a plurality of nodes, the method comprising:
establishing, by a program, a plurality of nodes for processing a plurality of orders, one or more of the plurality of nodes assigned to process orders;
receiving, by a first node of the plurality of nodes, information on an order, the first node configured to transmit a control signal to an apparatus based on the information meeting a condition that identifies a certain status associated with the apparatus and the order;
determining, by the first node, to transmit the control signal to the apparatus based on the information of the order matching a criterion of the condition that identifies the certain status associated with the apparatus and the order;
transmitting, by the program responsive to the determination, the control signal to the apparatus.
